Europäisches Patentamt

European Patent Office

Office européen des brevets

(11) Publication number: 0 164 846
A2

# EUROPEAN PATENT APPLICATION

(21) Application number: 85302756.3

(22) Date of filing: 19.04.85

(51) Int. Cl.⁴: **G 05 D 15/00**
**G 05 D 17/00**

(30) Priority: 15.05.84 GB 8412374

(43) Date of publication of application:
18.12.85 Bulletin 85/51

(84) Designated Contracting States:
CH DE FR IT LI

(71) Applicant: WESTINGHOUSE BRAKE AND SIGNAL
COMPANY LIMITED
Pew Hill
Chippenham Wiltshire(GB)

(72) Inventor: Wickham, David John
129 Malmesbury Road
Chippenham Wiltshire(GB)

(74) Representative: Page, Edmund John et al,
PAGE & CO Temple Gate House Temple Gate
Bristol BS1 6PL(GB)

(54) Electric motor driven actuator with variably adjustable torgue limiting device.

(57) An electric actuator having an electric motor (1) operable to exert a torque which, through a force transmission path (5/6/4/8/9/10/11/12), causes an output member (3) to exert an output force, wherein the force transmission path (5/6/4/8/9/10/11/12) includes a torque limiting device (4) by which the force transmitted through the path to the output member (3) can be limited to a predetermined value thus to limit the value of the output force exerted by the output member (3).

FIG.1

EP 0 164 846 A2

0164846

Electric Actuators

This invention relates to electric actuators and, more particularly, to electric actuators of the type having an electric motor operable to exert a torque which, through a force transmission path, causes an output member to exert an output force.

For certain applications of such actuators (for example, for railway brake actuators) it is required that the output force shall be limited to a value below that which, but for any limitation, the actuator would be capable of producing. In the exemplified case, it may be desirable that the permitted maximum value of the output force (the braking force) shall be lower when the railway vehicle is empty than when the vehicle is loaded. The present invention provides an electric actuator in which the value of the output force can be limited.

According to the invention, there is provided an electric actuator having an electric motor operable to exert a torque which, through a force transmission path, causes an output member to exert an output force, wherein the force transmission path includes a torque limiting device by which the force transmitted through the path to the output member can be limited to a predetermined value thus to limit the value of the output force exerted by the output member.

The torque limiting device may be variably adjustable correspondingly to vary the predetermined value and, in this case, it may be adjustable in accordance with the value of some characteristic upon which the maximum value of the output force is required to be dependant.

The torque limiting device may include a spring the force exerted by which determines the value of the force transmitted through the force transmissions path. Alternatively or additionally, the torque limiting device may include pressure-responsive means to which a fluid pressure can be applied to cause the means to exert a force which force determines the value of the force transmitted through the force transmission path. When the torque limiting device includes both the spring and the pressure-responsive means, the spring may determine a lower value of the force which can be transmitted through the force transmission path and the pressure-responsive means, when fluid pressure is applied thereto, determines higher value of the force which can be transmitted through the force transmission path. Alternatively, where both the spring and the pressure-responsive means is included, the force exerted by the spring may determine the maximum value of the force which can be transmitted through the force transmission path and the force exerted by the pressure-responsive means acts in opposition to the force exerted by the spring thus to determine a lower value of the force which can be transmitted through the force transmission path.

The torque limiting device may comprise a slippable clutch the loading on which determines at what value of the force being transmitted through the force transmission path the clutch slips to limit the force being transmitted to a value which is predetermined by the loading on the clutch.

The force transmission path may include a threaded member rotatable by the electric motor through the torque limiting device which member is threadedly engaged with the output member.

The actuator may be a brake actuator of a railway vehicle and, in this case and where the torque limiting device includes the pressure-responsive means above described, the value of the fluid pressure may be dependant upon the load of the vehicle.

One embodiment of the present invention will now be described in greater detail, by way of example only, with reference to the accompanying drawings of which:

Fig. 1 is a diagrammatic representation of one embodiment of the invention, and

Fig. 2 is an alternative construction for part of the embodiment of Fig. 1

The following described embodiments are, specifically, brake actuators for railway vehicles but it will be understood that they could equally constitute actuators for other purposes.

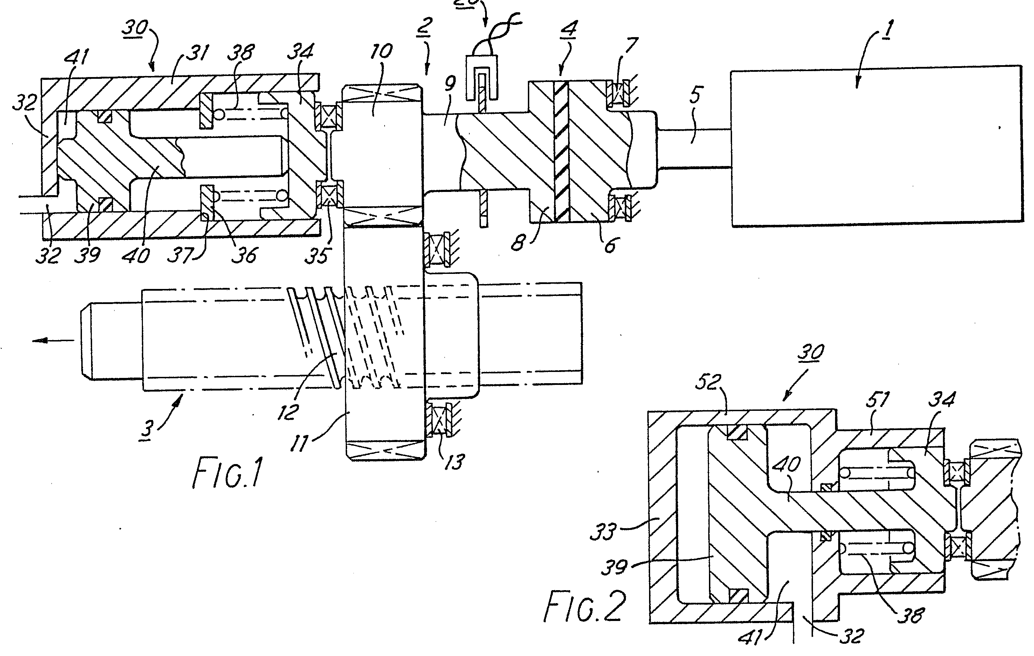

Referring to Fig. 1, the actuator here shown includes an electric motor 1 which is operable, through a force transmission path 2, to cause an output member 3 to exert an output force in the direction of arrow "A".

In the transmisson path 2, is a torque limiting device in the form of a slippable clutch 4. The clutch 4 is slippable at variable values of the torque transmitted through the transmission path 2 depending upon the axial loading of the clutch 4. It will be seen that the output shaft 5 of the motor 1 is connected to the input side 6 of the clutch 4 which input side 6 is supported on a thrust bearing 7. The output side 8 of the clutch 4 is carried by a shaft 9 which also carries a gearwheel 10 meshed with a second gearwheel 11. The gearwheel 10 is threaded on its interior threadedly to engage a ball-screw portion 12 of the output member 3. Again, the gearwheel 10 is supported on a thrust-bearing 13.

From the description so far, it will be appreciated that operation of the motor 1 in the appropriate sense will, through the transmission path 3 (i.e. clutch 4, gearwheel 10, gearwheel 11 and its threaded connection with the output member 3 through the ball-screw portion 12) extend the output member 3 in the direction of arrow "A". When the output member 3 is arrested in such movement (by the brake - not shown - becoming engaged), continued operation of the motor 1 in the same sense, will cause the output member 3 to exert an increasing force (a braking force). Conversely, after a brake operation, reverse operation of the electric motor 1 will, firstly, reduce the force being exerted by the output member 3 and, thereafter, return the output member 3 in a direction opposite to arrow "A" fully to release the brake.

Mounted on the shaft 9 is a Hall effect encoder 20. This encoder measures the degree of rotation of the motor 1 and, connected into the electric motor control circuit (not shown) operates to measure the torque exerted by the electric motor by measuring its degree of operation. Hence, the control circuit can ensure that the electric motor 1 is operated to the degree necessary to generate the required value of the output force and, also is operated to the degree necessary (when the output force has reduced substantially to zero after a brake application) to ensure the required brake clearance.

In the above description of operation, it has been assumed that the output force did not exceed the required maximum. Should it have been, however, that the control circuit of the electric motor 1 had instructed operation of the electric motor 1 to exert a force in excess of that which can be transmitted by the clutch 4, the clutch 4 would have slipped when that maximum value had been reached thus ensuring that the output member 3 exerted an output force (a braking force) limited to that determined by the clutch 4).

The value of the transmitted force at which the clutch 4 will slip is determined by torque control means 30. The means 30 comprises a fixed cylinder 31 closed at one end (save for port 32) by an end wall 33 and, at the other end by a first piston 34 supported, through a thrust bearing 35, on gearwheel 10. Extending between the piston 34 and a washer 36 engaged with a shoulder 37 on the interior wall of the cylinder 31, is a spring 38.

It will be seen that the spring 38 thus exerts a force on the piston 34 which acts through gearwheel 10 and shaft 9, axially to load the clutch 4.

Also within the cylinder 31 is a second piston 39 the piston rod 40 of which engages the first piston 34. It will thus be seen that by varying the pressure of a fluid (whether hydraulic or pneumatic) applied in chamber 41 through part 32, the first piston 34 will be loaded with a force additional to the exerted by the spring 38. Hence, it will be seen, the spring 38 will determine the minimum loading of the first piston 34 to which a further variable loading will be added dependant on the value of the fluid pressure in chamber 41. It follows, therefore, that the axial loading on the clutch 4 (and, therefore, the value of the transmitted force at which it will slip) will, at the minimum, be that determined by the spring 38 and, above that, by the value of the fluid pressure.

The value of the fluid pressure is determined by means (not shown) so as to be dependant upon the degree of loading of the railway vehicle on which the actuator is mounted. Thus, the value of the braking force will be similarly dependant.

Turning now to Fig. 2 wherein like references are used for like parts, there is here shown an alternative form of torque control means 30. In this alternative there are two cylinders 51 and 52. The spring 38 is located in the cylinder 51 and the piston 39 in the cylinder 52. Here, the piston rod 40 is connected to the first piston 34 and the part 32 in the cylinder 52 is on the opposite side of the piston 39 to that in which it is in the Fig. 1 embodiment.

With this alternative arrangement, it is clear that the fluid pressure in the chamber 41 will generate a force on the first piston 34 which will act in opposition to the force exerted by the spring 38. Hence, in contrast to the Fig. 1 construction, the spring 38 of Fig. 2 will set a maximum loading on the clutch 4 which is reducible by increasing the value of the fluid pressure in chamber 41. Consequently, for the Fig. 2 construction, the value of the fluid pressure in chamber 41 must be inversely proportional to the loading of the vehicle.

Various means may be used to derive the fluid pressure applied to chamber 41 which are, of themselves, obvious. For example, it may be derived from a piston-and-cylinder arrangement which is arranged in parallel to the conventional vehicle springs such that deflection of the springs under the loading of the vehicle causes the piston-and-cylinder arrangements to generate a fluid pressure the value of which is dependant upon the deflection of the springs. Alternatively, the piston-and-cylinder (or comparable device) may be arranged in series with the conventional vehicle springs between one end of the springs and the vehicle body. In this arrangement, the piston-and-cylinder will "see" the loading of the vehicle springs.

Whilst in the above described embodiments the "signal" indicative of the loading of the vehicle is a fluid pressure applied to the chamber 41 of a piston-and-cylinder arrangement 31/39 or 52/39, clearly the "signals" could take other forms. For example it could be an electrical signal which controls the operation of a second electric motor, this motor generating a force axially to load the clutch 4.

Again, as described above the torque limiting device is a slippable clutch; however, alternative devices could be used. For example, the device could be a detent/plunger arrangement - the plungers being withdrawn from the detents when the predetermined required torque level is reached. Alternatively, a roller (or ball)/ramp arrangement could be used whereby the rollers (or balls) slip on the ramps at the predetermined required torque level.

Claims:

1. An electric actuator having an electric motor (1)
   operable to exert a torque which, through a force
   transmission path (5/6/4/8/9/10/11/12), causes an
   output member (3) to exert an output force, wherein
   the force transmission path (5/6/4/8/9/10/11/12)
   includes a torque limiting device (4) by which the
   force transmitted through the path to the output
   member (3) can be limited to a predetermined value
   thus to limit the value of the output force exerted
   by the output member (3).

2. An actuator as claimed in Claim 1, wherein the
   torque limiting device (4) is variably adjustable
   correspondingly to vary the predetermined value

3. An actuator as claimed in Claim 2 wherein the
   torque limiting device (4) is adjustable in
   accordance with the value of some characteristic
   upon which the maximum value of the output force is
   required to be dependant.

4. An actuator as claimed in any one of the preceding
   Claims, wherein the torque limiting device (4)
   includes a spring (38) the force exerted by which
   determines the value of the force transmitted
   through the force transmissions path.

5. An actuator as claimed in anyone of Claims 1 to 3,
   wherein the torque limiting device (4) includes
   pressure-responsive means (31/39) to which a fluid
   pressure can be applied to cause the means (31/39)
   to exert a force which force determines the value
   of the force transmitted through the force transmission path (5/6/4/8/9/10/11/12).

6.  An actuator as claimed in both Claim 4 and Claim 5
    wherein the force exerted by the spring (38)
    determines a lower value of the force which can be
    examined through the force transmission path
    (5/6/4/8/9/10/11/12) and the pressure-responsive
    means (31/39), when fluid pressure is applied
    thereto, determines higher value of the force which
    can be transmitted through the force transmission
    path.

7.  An actuator as claimed in both Claim 5 and Claim 6,
    wherein the force exerted by the spring (38)
    determines the maximum value of the force which can
    be transmitted through the force transmission path
    and the force exerted by the pressure-responsive
    means (52/39) acts in opposition to the force
    exerted by the spring (38) thus to determine a
    lower value of the force which can be transmitted
    through the force transmission path.

8.  An actuator as claimed in any one of the preceding
    Claims, wherein the torque limiting device (4)
    comprises a slippable clutch the loading on which
    determines at what value of the force being
    transmitted through the force transmission path
    (5/6/4/8/9/10/11/12) the clutch slips to limit the
    force being transmitted to a value which is
    predetermined by the loading on the clutch.

9.  An actuator as claimed in any one of the preceding
    Claims, wherein the force transmission path
    (5/6/4/8/9/10/11/12) includes a threaded member
    (11) rotatable by the electric motor (1) through the torque limiting device (4) which member (11) is threadedly engaged with the output member(3).

10. An actuator substantially as claimed in any one of the preceding claims, wherein the actuator is a brake actuator of a railway vehicle.

11. An actuator as claimed in Claim 10 where dependant on any one of Claims 5 to 7 or on either Claim 8 or Claim 9 when dependant on any one of Claims 5 to 7, wherein the value of the fluid pressure is dependant upon the load of the railway vehicle.

FIG.1

FIG.2

1/1

0164846